(19) Europäisches Patentamt / European Patent Office / Office européen des brevets

(11) **EP 4 113 645 A1**

(12) **EUROPEAN PATENT APPLICATION**
published in accordance with Art. 153(4) EPC

(43) Date of publication:
**04.01.2023 Bulletin 2023/01**

(51) International Patent Classification (IPC):
***H01M /*** *(2006.01)*

(21) Application number: **20927586.6**

(52) Cooperative Patent Classification (CPC):
**H01G 2/10; H01G 11/78; H01M 50/126;
H01M 50/14;** Y02E 60/10

(22) Date of filing: **24.03.2020**

(86) International application number:
**PCT/CN2020/080969**

(87) International publication number:
**WO 2021/189265 (30.09.2021 Gazette 2021/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **DONGGUAN POWERAMP
TECHNOLOGY LIMITED
Dongguan, Guangdong 523000 (CN)**

(72) Inventor: **JIANG, Jing
Ningde, Fujian 350900 (CN)**

(74) Representative: **Icosa
83 avenue Denfert-Rochereau
75014 Paris (FR)**

(54) **ELECTROCHEMICAL DEVICE AND ELECTRONIC DEVICE**

(57) This application provides an electrochemical device. The electrochemical device includes an electrode assembly and a housing. The housing forms an accommodation space configured to accommodate the electrode assembly. The housing includes a first sealing edge. The first sealing edge includes a first sealing film and a second sealing film. A direction from a side of the first sealing edge close to the accommodation space to a side away from the accommodation space is defined as a first direction. Along the first direction, the first sealing film includes a first seal region and a second seal region that are connected to each other, and the second sealing film includes a third seal region and a fourth seal region that are connected to each other. The first seal region and the third seal region combine to form a second sealing region. The second seal region and the fourth seal region combine to form a first sealing region. In a thickness direction of the first sealing edge, a thickness of the first sealing region is less than a thickness of the second sealing region. This application further provides an electronic device containing the electrochemical device. In this application, the first sealing region and the second sealing region are disposed on the housing, thereby alleviating the problem of stress concentration at an overflow point of the housing during sealing and improving safety performance.

FIG. 2

EP 4 113 645 A1

## Description

## TECHNICAL FIELD

This application relates to the technical field of energy storage, and in particular, to an electrochemical device and an electronic device containing the electrochemical device.

## BACKGROUND

An electrochemical device (such as a pouch-type battery) is hermetically packaged in a packaging bag (such as aluminum plastic film or a steel plastic film). In sealing the packaging bag (for example, by heat sealing or glue sealing), the glue at a sealing position is squeezed toward both sides. A relatively large overflow point occurs on an inner side and an outer side of a sealing imprint formed (at the sealing position). In a case that the electrochemical device drops, vibrates, or the like, stress concentration may occur at the large overflow point. At this point, the packaging bag is prone to rupture, and even prone to electrolyte leakage, thereby affecting safety performance of the electrochemical device.

## SUMMARY

In view of disadvantages of the prior art described above, this application provides an electrochemical device that alleviates the problem of stress concentration at an overflow point.

An embodiment of this application provides an electrochemical device. The electrochemical device includes an electrode assembly and a housing. The housing forms an accommodation space configured to accommodate the electrode assembly. The housing includes a first sealing edge. The first sealing edge includes a first sealing film and a second sealing film. A direction from a side of the first sealing edge close to the accommodation space to a side away from the accommodation space is defined as a first direction. Along the first direction, the first sealing film includes a first seal region and a second seal region that are connected to each other, and the second sealing film includes a third seal region and a fourth seal region that are connected to each other. The second seal region and the fourth seal region combine to form a first sealing region. The first seal region and the third seal region combine to form a second sealing region. In a thickness direction of the first sealing edge, a thickness of the first sealing region is less than a thickness of the second sealing region.

In the electrochemical device according to this embodiment of this application, by disposing the first sealing region and the second sealing region in the first sealing edge, it is avoided that the overflow adhesive generated during the sealing from accumulating in the accommodation space, thereby alleviating the problem of stress concentration. In this way, the housing of the electrochemical device is not prone to rupture in the case of drop, vibration, and the like, and safety performance of the battery is improved.

Optionally, a first imprint is formed between the first sealing region and the second sealing region. A second imprint is formed between the second sealing region and the accommodation space.

Optionally, the electrochemical device further includes an overflow adhesive. The overflow adhesive is connected to the second sealing region and is accommodated in the accommodation space. Along the first direction, a width of the first sealing region is $W_1$ (mm), and a width of the second sealing region is $W_2$ (mm). In the thickness direction of the first sealing edge, a thickness of the first sealing film is $T_0$ (mm), the thickness of the first sealing region is $H_0$ (mm), and a maximum thickness of the second sealing region is $H_1$ (mm). A cross-sectional area $S$ ($mm^2$) of the overflow adhesive along the thickness direction of the first sealing edge satisfies the following formula: $(2 \times T_0 - H_1) \times (W_1 + W_2) < S < (2 \times T_0 - H_0) \times (W_1 + W_2)$.

If the cross-sectional area $S$ of the overflow adhesive is excessive, the overflow adhesive forms a stress concentration point by accumulating. If the cross-sectional area $S$ of the overflow adhesive is deficient, the amount of the overflow adhesive in an overflow region is small, and the overflow region fails to achieve a good sealing effect. By controlling the cross-sectional area of the overflow adhesive formed in the overflow region, the amount of adhesive that overflows in the sealing region during the sealing can be equalized. This not only avoids a stress concentration point formed by accumulation of a large amount of overflow adhesive in the overflow region, but also ensures sealing strength of the overflow region, and achieves excellent sealing reliability of the electrochemical device.

Optionally, the ratio of $W_2$ to $W_1$ is 0.01 to 0.5, thereby further equalizing the amount of adhesive that overflows in the sealing region during sealing, and enhancing the sealing strength.

Optionally, the ratio of $H_1$ to $H_0$ is 1 to 10, thereby further equalizing the amount of adhesive that overflows in the sealing region during sealing, and enhancing the sealing strength.

Optionally, a tensile sealing force of both the first sealing region and the second sealing region is 1 to 10 N/mm, so that the housing achieves relatively high strength.

Optionally, the electrochemical device further includes a first tab. The first tab is electrically connected to the electrode assembly and protrudes from one side of the housing, and the first sealing edge and the first tab are located on a same side of the electrochemical device. The sealing strength on a tab side of the electrochemical device is usually the lowest. That the first sealing edge and the first tab are located on the same side of the electrochemical device helps to increase the sealing strength on the first tab side and improve the safety performance of the electrochemical device.

Optionally, the housing further includes a second sealing edge. The second sealing edge is connected to or disconnected from the first sealing edge. The second sealing edge includes a third sealing film and a fourth sealing film. A direction from a side of the second sealing edge close to the accommodation space to a side away from the accommodation space is defined as a second direction. Along the second direction, the third sealing film includes a fifth seal region and a sixth seal region that are connected to each other, and the fourth sealing film includes a seventh seal region and an eighth seal region that are connected to each other. The sixth seal region and the eighth seal region combine to form a third sealing region. The fifth seal region and the seventh seal region combine to form a fourth sealing region. In a thickness direction of the second sealing edge, a thickness of the third sealing region is less than a thickness of the fourth sealing region.

The second sealing edge and the first sealing edge may have the same sealing structure. With a plurality of sealing edges disposed, the sealing safety of the electrochemical device can be further improved.

Optionally, the housing further includes a third sealing edge. The third sealing edge is connected to the first sealing edge or the second sealing edge. The third sealing edge includes a fifth sealing film and a sixth sealing film. A direction from a side of the third sealing edge close to the accommodation space to a side away from the accommodation space is defined as a third direction. Along the third direction, the fifth sealing film includes a ninth seal region and a tenth seal region that are connected to each other. The sixth sealing film includes an eleventh seal region and a twelfth seal region that are connected to each other. The tenth seal region and the twelfth seal region combine to form a fifth sealing region, and the ninth seal region and the eleventh seal region combine to form a sixth sealing region. In a thickness direction of the third sealing edge, a thickness of the fifth sealing region is less than a thickness of the sixth sealing region.

The third sealing edge and the first sealing edge may have the same sealing structure, so as to further improve the sealing safety of the electrochemical device.

Optionally, the electrochemical device further includes a positive tab and a negative tab. Both the positive tab and the negative tab are electrically connected to the electrode assembly, and protrude out of the housing, and are located on the same side or different sides of the housing.

An embodiment of this application further provides an electronic device containing the electrochemical device.

## BRIEF DESCRIPTION OF DRAWINGS

To describe the technical solutions in the embodiments of this application or the prior art more clearly, the following outlines the drawings to be used in the description of the embodiments of this application or the prior art. Evidently, the drawings outlined below are merely a part of embodiments of this application, and a person of ordinary skill in the art may derive other drawings from the outlined drawings without making any creative efforts.

FIG. 1 is a schematic structural diagram of an electrochemical device according to a first embodiment of this application;

FIG. 2 is a sectional view of the electrochemical device shown in FIG. 1 and sectioned along a line II-II;

FIG. 3 is a schematic structural diagram of an electrochemical device according to a second embodiment of this application;

FIG. 4 is a schematic structural diagram of an electrochemical device according to a third embodiment of this application;

FIG. 5 is a schematic structural diagram of an electrochemical device according to a fourth embodiment of this application;

FIG. 6 is a local sectional view of an electrochemical device according to a fifth embodiment of this application; and

FIG. 7 is a schematic structural diagram of a seal head and an electrochemical device according to an embodiment of this application.

Reference numerals of main components:

Electrochemical device 100, 200, 300, 400, 500

Housing 10

Electrode assembly 21

Positive tab 23

Negative tab 25

Accommodation space 12

First sealing edge 13

Second sealing edge 14

Third sealing edge 15

First sealing film 30

First seal region 132

Second seal region 134

Second sealing film 90

Third seal region 135

Fourth seal region 136

Metal foil layer 31

Protection layer 32

Hot-pressing layer 33

Second sealing region 131

Overflow region 137

First sealing region 133

Overflow adhesive 40, 52

Upper seal head 60

Lower seal head 70

Sealing face 80

First seal region of the seal head 81

Second seal region of the seal head 83

First imprint 51

Second imprint 53

Third sealing region 145

Fourth sealing region 146

Third imprint 147

Fourth imprint 148

Fifth sealing region 153

Sixth sealing region 154

Fifth imprint 155

Sixth imprint 156

This application is further described below with reference to the following specific embodiments and the foregoing drawings.

## DETAILED DESCRIPTION OF EMBODIMENTS

The following describes the technical solutions in the embodiments of this application clearly and thoroughly with reference to the drawings herein. Evidently, the described embodiments are merely a part of but not all of the embodiments of this application. All other embodiments derived by a person of ordinary skill in the art based on the embodiments of the present invention without making any creative effort fall within the protection scope of the present invention.

It is hereby noted that a component referred to as being "connected to" another component may be directly connected to the other component or may be connected to the other component through an intermediate component. A component considered to be "disposed on" another component may be directly disposed on the other component or may be disposed on the other component through an intermediate component. Unless otherwise defined, all technical and scientific terms used herein have the same meanings as usually understood by a person skilled in the technical field of this application. The terms "outer side" and "inner side" used in embodiments of this application are intended merely for ease of describing specific embodiments but not intended to limit this application.

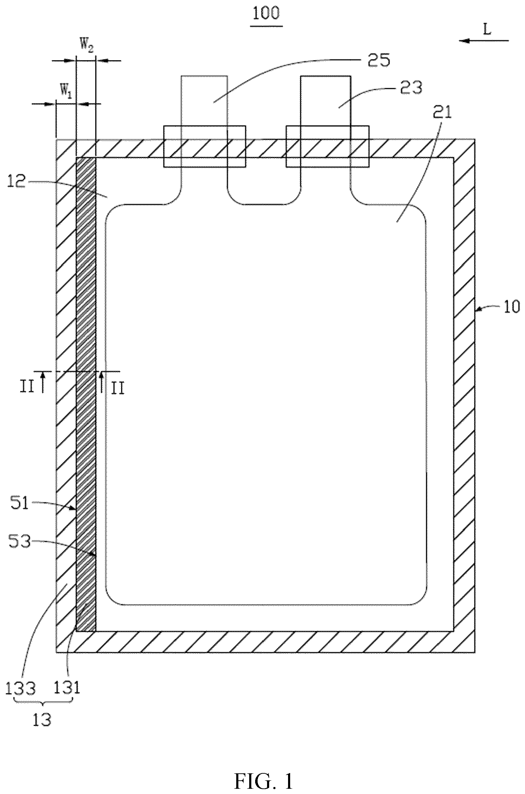

Referring to FIG. 1, FIG. 1 shows an electrochemical device 100 according to a first embodiment of this application. The electrochemical device 100 according to this embodiment of this application is a battery. Optionally, in other embodiments, the electrochemical device 100 may be a capacitive device (including at least one capacitive or pseudocapacitive electrode) or a hybrid device (including two different types of electrodes selected from a battery, an electrochemical double layer capacitor (EDLC), or a pseudocapacitive electrode).

The electrochemical device 100 includes a housing 10, an electrode assembly 21, a positive tab 23, and a negative tab 25. An accommodation space 12 is formed in the housing 10. The electrode assembly 21 is located in the accommodation space 12. Both the positive tab 23 and the negative tab 25 are electrically connected to the electrode assembly 21 and protrude out of the housing 10. The positive tab 23 and the negative tab 25 are located on a same side of the housing 10.

The housing 10 includes a first sealing edge 13 extending outward from one side of the accommodation space 12. The first sealing edge 13 is located on a different side of the housing 10 than the positive tab 23 and the negative tab 25. The side of the housing 10, on which the positive tab 23 and the negative tab 25 are located, may be sealed by a commonly used sealing method such as heat sealing.

Optionally, the first sealing edge 13 may be located on the same side of the housing 10 as the positive tab 23 and the negative tab 25. The first sealing edge 13 is configured to seal the positive tab 23 and the negative tab 25, so as to increase sealing strength on the tab side and enhance the safety performance of the electrochemical device.

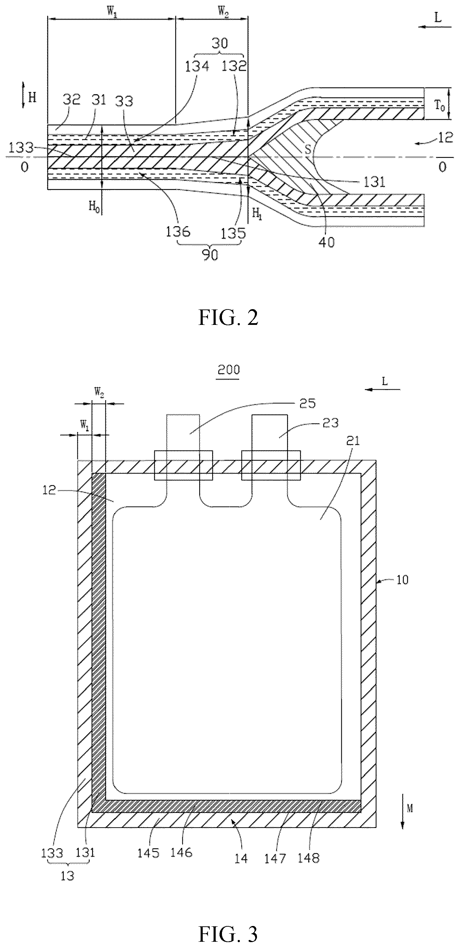

Referring to FIG. 2, the first sealing edge 13 includes a first sealing film 30 and a second sealing film 90 disposed opposite to each other. The first sealing film 30 and the second sealing film 90 are of the same structure, and may be an aluminum plastic film, a steel plastic film, or the like.

Optionally, in other embodiments, the first sealing film 30 and the second sealing film 90 may be of different structures. For example, in a pouch-type battery, the first sealing film 30 includes a metal foil layer 31, and a protection layer 32 and a hot-pressing layer 33 that are disposed on two opposite sides of the metal foil layer 31 respectively. The protection layer 32 is located on the outer side of the housing 10 for a purpose of external protection, and may be made of an insulation material such as nylon. The metal foil layer 31 is configured to maintain mechanical strength and block moisture, and may be an aluminum foil layer or a steel foil layer. With thermal bonding properties, the heat-pressing layer 33 serves a purpose of sealing, and is located on the inner side of the housing 10. The hot-pressing layer 33 may be made of polypropylene (polypropylene, PP).

A direction from a side of the first sealing edge 13 close to the accommodation space 12 to a side away from the accommodation space 12 is defined as a first direction L. Along the first direction L, the first sealing film 30 includes a first seal region 132 and a second seal region 134 that are connected to each other. The second sealing film 90 includes a third seal region 135 and a fourth seal region 136 that are connected to each other. Two neighboring surfaces of the first seal region 132 and the third seal region 135 fit closely with each other so that the first seal region 132 and the third seal region 135 combine to form the second sealing region 131. Two neighboring surfaces of the second seal region 134 and the fourth seal region 136 fit closely with each other so that the second seal region 134 and the fourth seal region 136 combine to form the first sealing region 133. In other words, the hot-pressing layer located in the second seal region 134 is connected to the hot-pressing layer located in the fourth seal region 136 in a close fitting manner.

Along the first direction L, the thickness of the first sealing region 133 keeps equal in all parts, the thickness of any part of the second sealing region 131 is greater than the thickness of the first sealing region 133, and the thickness of any part of the accommodation space 12 is greater than a maximum thickness of the second sealing region 131. Referring to FIG. 1, a first imprint 51 is formed between the first sealing region 133 and the second sealing region 131. A second imprint 53 is formed between the second sealing region 131 and the accommodation space 12.

An overflow adhesive 40 is accommodated in the accommodation space 12. In this application, the overflow adhesive 40 means an adhesive hardened after the adhesive overflows from the first sealing region 133 and the second sealing region 132 into the accommodation space 12 during sealing. When the housing 10 is being sealed such as heat-sealed, the adhesive formed by melting the hot-pressing layer 33 located in the first sealing region 133 and the second sealing region 132 enters the accommodation space 12 along the inner surfaces of the first sealing film 30 and the second sealing film 90 under a pressure of the seal head, so as to form the overflow adhesive 40. The overflow adhesive 40 is connected to the second sealing region 132 and partly fills in the accommodation space 12. The side of the overflow adhesive 40 away from the sealing region 133 is recessed along the first direction L.

In an embodiment, along the first direction L, a width of the first sealing region 133 is $W_1$ (mm), and a width of the second sealing region 131 is $W_2$ (mm). Optionally, a ratio of $W_2$ to $W_1$ is 0.01 to 0.5.

As tested, when the ratio of $W_2$ to $W_1$ is less than 0.01, the width of the second sealing region 131 is deficient, the overflow adhesive 40 is generated in a relatively large amount, and the space is not enough to accommodate the adhesive that overflows out of the first sealing region 133. The overflowing adhesive is accumulated in the first sealing region 133 to form a stress concentration point. When the ratio of $W_2$ to $W_1$ is greater than 0.5, the width of the first sealing region 133 is deficient and may affect the sealing strength of the first sealing edge 13, thereby impairing the life of the seal.

In an embodiment, along the thickness direction H of the first sealing edge 13, a thickness of the first sealing film 30 is To (mm), a thickness of the first sealing region 133 is $H_0$ (mm), and a maximum thickness of the second sealing region 131 is $H_1$ (mm). Optionally, a ratio of $H_1$ to $H_0$ is 1 to 10.

As tested, when the ratio of $H_1$ to $H_0$ is less than 1, it indicates that the adhesive melted and overflowing out of the first sealing region 133 during sealing is deficient and may lead to untight sealing, thereby failing to achieve a good bonding and sealing effect. When the ratio of $H_1$ to $H_0$ is greater than 10, it indicates that the adhesive melted and overflowing out of the first sealing region 133 during sealing is excessive. A large amount of overflowing adhesive accumulates in the accommodation space 12 to form a stress concentration point. When the electrochemical device 100 drops, vibrates, or the like, the housing 10 is prone to rupture, and the item contained in the housing 10, such as an electrolytic solution, is at risk of leaking.

In an embodiment, the cross-sectional area S ($mm^2$) of the overflow adhesive 40 along the thickness direction H of the first sealing edge 13 satisfies the following formula: $(2 \times T_0 - H_1) \times (W_1 + W_2) < S < (2 \times T_0 - H_0) \times (W_1 + W_2)$.

To be specific, the cross-sectional area of the overflow adhesive 40 in this application falls between (i) a cross-sectional area of the adhesive that overflows when the first sealing edge 13 includes only the first sealing region 133 (the width of the first sealing region 133 along the first direction L is equal to the width of the first sealing edge 13) and (ii) a cross-sectional area of the adhesive that overflows when the first sealing edge 13 includes only the second sealing region 131 (the width of the second sealing region 131 along the first direction L is equal to the width of the first sealing edge 13). The cross-sectional area S of the overflow adhesive 40 starts from a point at which the thickness of the accommodation space 12 begins to be greater than the thickness of the first sealing edge 13.

As tested, if S is excessive, it indicates that a large amount of adhesive overflowing from the first sealing edge 13 flows into the accommodation space 12. However, the accommodation space 12 is not enough to accommodate a large amount of overflowing adhesive. The large amount of overflowing adhesive accumulates in the accommodation space 12 to form a stress concentration point. In a case that the electrochemical device 100 drops, vibrates, or the like, the housing 10 is prone to rupture, and the item contained in the housing 10, such as the electrolytic solution, is at risk of leaking. If S is deficient, it indicates that the adhesive flowing from the first sealing edge 13 into the accommodation space 12 is deficient, and fails to achieve a good bonding and sealing effect.

Optionally, a tensile sealing force of both the first sealing region 133 and the second sealing region 131 is 1 to 10 N/mm. If the tensile sealing force is deficient, the sealing strength of the sealing region is insufficient. Optionally, an upper limit of the tensile sealing force of the sealing region may be an upper limit of a tensile force of the housing 10.

Referring to FIG. 3, an electrochemical device 200 according to a second embodiment of this application is almost the same as the electrochemical device 100 according to the first embodiment, but differs in that the housing 10 further includes a second sealing edge 14 that protrudes outward from one side of the accommodation space 12. The second sealing edge 14 and the first sealing edge 13 are located on two neighboring sides of the housing 10 respectively and are connected to each other. Optionally, the second sealing edge 14 and the first sealing edge 13 may be located on two opposite sides of the housing 10 respectively instead, without being connected to each other.

Optionally, the second sealing edge 14 and the first sealing edge 13 may be of the same structure. The second sealing edge 14 includes a third sealing film and a fourth sealing film disposed opposite to each other. The third sealing film and the fourth sealing film are of the same structure, and may be an aluminum plastic film, a steel plastic film, or the like. Optionally, in other embodiments, the third sealing film and the fourth sealing film may be of different structures. In a pouch-type battery, the third sealing film includes a metal foil layer, and a protection layer and a hot-pressing layer that are disposed on two opposite sides of the metal foil layer respectively.

A direction from a side of the second sealing edge 14 close to the accommodation space 12 to a side away from the accommodation space 12 is defined as a second direction M. Along the second direction M, the third sealing film includes a fifth seal region (not shown) and a sixth seal region (not shown) that are connected to each other, and the fourth sealing film includes a seventh seal region (not shown) and an eighth seal region (not shown) that are connected to each other.

Two neighboring surfaces of the sixth seal region and the eighth seal region fit closely with each other so that the sixth seal region and the eighth seal region combine to form the third sealing region 145. Two neighboring surfaces of the fifth seal region and the seventh seal region fit closely with each other so that the fifth seal region and the seventh seal region combine to form the fourth sealing region 146. A third imprint 147 is formed between the third sealing region 145 and the fourth sealing region 146. A fourth imprint 148 is formed between the fourth sealing region 146 and the accommodation space 12. In a thickness direction of the second sealing edge 14, a thickness of the third sealing region 145 is less than a thickness of the fourth sealing region 146.

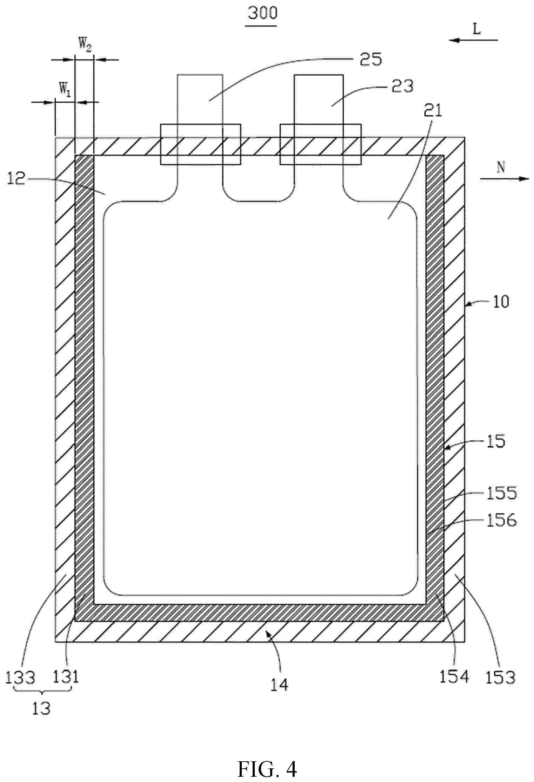

Referring to FIG. 4, an electrochemical device 300 according to a third embodiment of this application is almost the same as the electrochemical device 200 according to the second embodiment, but differs in that the housing 300 further includes a third sealing edge 15 that protrudes outward from one side of the accommodation space 12. The third sealing edge 15 and the first sealing edge 13 are located on two opposite sides of the housing 10 respectively, and the second sealing edge 14 is connected to the first sealing edge 13 and the third sealing edge 15.

Optionally, the third sealing edge 15 and the first sealing edge 13 are of the same structure. The third sealing edge 15 includes a fifth sealing film and a sixth sealing film disposed opposite to each other. The fifth sealing film and the sixth sealing film are of the same structure, and may be an aluminum plastic film, a steel plastic film, or the like. Optionally, in other embodiments, the fifth sealing film and the sixth sealing film may be of different structures. In a pouch-type battery, the fifth sealing film includes a metal foil layer, and a protection layer and a hot-pressing layer that are disposed on two opposite sides of the metal foil layer respectively.

A direction from a side of the third sealing edge 15 close to the accommodation space 12 to a side away from the accommodation space 12 is defined as a third direction N. Along the third direction N, the fifth sealing film includes a ninth seal region (not shown) and a tenth seal region (not shown) that are connected to each other. The sixth sealing film includes an eleventh seal region (not shown) and a twelfth seal region (not shown) that are connected to each other.

Two neighboring surfaces of the tenth seal region and the twelfth seal region fit closely with each other so that the tenth seal region and the twelfth seal region combine to form the fifth sealing region 153. Two neighboring surfaces of the ninth seal region and the eleventh seal region fit closely with each other so that the ninth seal region and the eleventh seal region combine to form the sixth sealing region 154. A fifth imprint 155 is formed between the fifth sealing region 153 and the sixth sealing region 154. A sixth imprint 156 is formed between the sixth sealing region 154 and the accommodation space 12. In a thickness direction of the third sealing edge 15, a thickness of the fifth sealing region 153 is less than a thickness of the sixth sealing region 154.

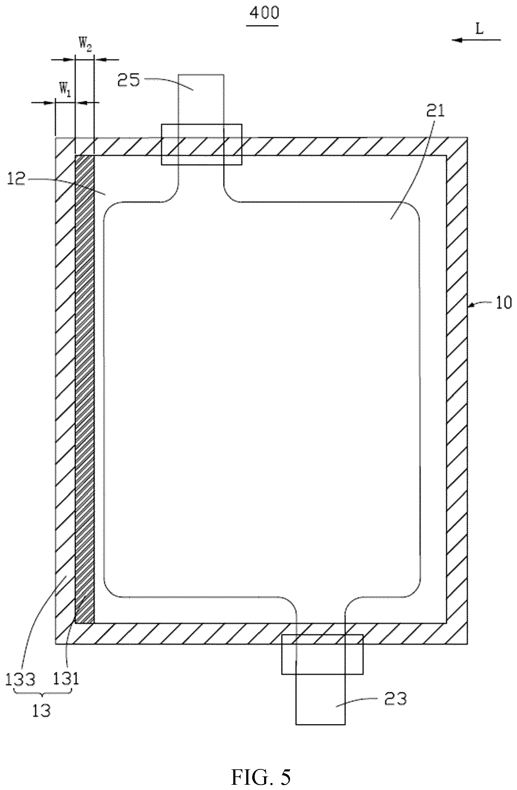

Referring to FIG. 5, an electrochemical device 400 according to a fourth embodiment of this application is almost the same as the electrochemical device 100 according to the first embodiment, but differs in that the positive tab 23 and the negative tab 25 are located on two opposite sides of the housing 10 respectively. Optionally, the positive tab 23 and the negative tab 25 may be located on neighboring sides of the housing 10 respectively instead.

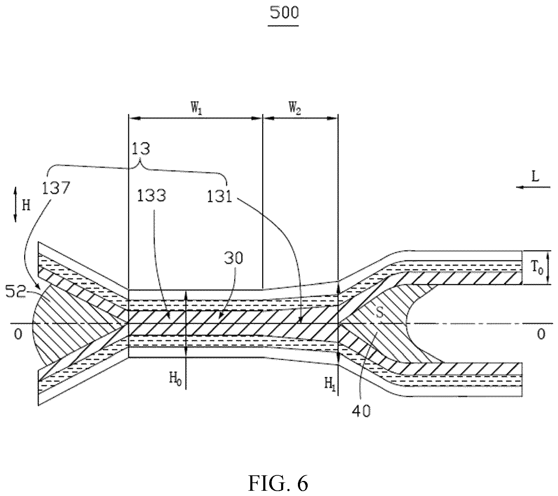

Referring to FIG. 6, an electrochemical device 500 according to a fifth embodiment of this application is almost the same as the electrochemical device 100 according to the first embodiment, but differs in that the first sealing edge 13 further includes an overflow region 137. The overflow region 137 is located on a side of the seal region 133 away from the overflow area 131. The overflow region 137 is filled with the overflow adhesive 52. Optionally, in other embodiments, the first sealing edge 13 may further include a third sealing region disposed on a side of the first sealing region 133 away from the second sealing region 131. The third sealing region and the second sealing region 131 may be of the same structure.

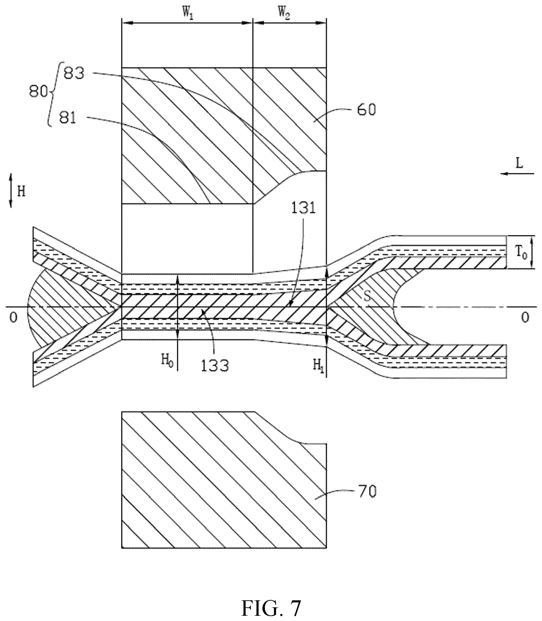

Referring to FIG. 7, in an embodiment, the housing 10 is sealed by an upper seal head 60 and a lower seal head 70. The upper seal head 60 and the lower seal head 70 each include a sealing face 80. The sealing face 80 includes a seal-head first seal region 81 corresponding to the first sealing region 133 of the housing 10 and a seal-head second seal region 83 corresponding to the second sealing region 131. The seal-head second seal region 83 is recessed against the seal-head first seal region 81. The sealing face located in the seal-head first seal region 81 is a flat face. The sealing face located in the seal-head second seal region 83 is a stepped face. The shape of the sealing face located in the seal-head second seal region 83 matches the shape of the second sealing region 131 of the first sealing edge 13. Along the first direction L, a width of the seal-head second seal region 83 is equal to a width of the second sealing region 131. Optionally, the sealing face located in the seal-head second seal region 83 may be an arc face, a beveled face, or the like instead, as long as the cross-sectional area S of the overflow adhesive 40 formed in the overflow region 137 after completion of sealing the housing 10 satisfies the following formula: $(2 \times T_0 - H_1) \times (W_1 + W_2) < S < (2 \times T_0 - H_0) \times (W_1 + W_2)$.

Optionally, only the sealing face 80 of the upper seal head 60 or the lower seal head 70 includes the seal-head first seal region 81 and the seal-head second seal region 83, and the sealing face of the other seal head is a flat face. In this way, the second sealing region 131 is formed by just disposing the first seal region 132 and the second seal region 134 in a non-parallel manner or disposing the third seal region 135 and the fourth seal region 136 in a non-parallel manner.

An embodiment of this application further provides an electronic device containing the electrochemical device 100. The electronic device may be any known electronic device, for example, a mobile phone, a computer, a wearable device, an unmanned aerial vehicle, an energy storage device, an electric tool, and an electric vehicle.

The embodiments hereof are described in a progressive manner, and each embodiment focuses on differences from other embodiments. The part that is identical or similar between different embodiments may be learned by referring to the corresponding embodiment. The foregoing description of the disclosed embodiments enables any person skilled in the art to implement or use the technical solutions of this application. Various modifications to such embodiments are readily evident to a person skilled in the art. General principles defined herein may be implemented in other embodiments without departing from the spirit or scope of this application. Therefore, this application is not limited to the embodiments shown, but is to be accorded the widest scope consistent with the principles and novel features disclosed herein.

**Claims**

1. An electrochemical device, comprising an electrode assembly and a housing, wherein the housing forms an accommodation space configured to accommodate the electrode assembly, the housing comprises a first sealing edge, and the first sealing edge comprises a first sealing film and a second sealing film;

   a direction from a side of the first sealing edge close to the accommodation space to a side away from the accommodation space is defined as a first direction, and, along the first direction, the first sealing film comprises a first seal region and a second seal region that are connected to each other, and the second sealing film comprises a third seal region and a fourth seal region that are connected to each other; and
   the second seal region and the fourth seal region combine to form a first sealing region, the first seal region and the third seal region combine to form a second sealing region, and, in a thickness direction of the first sealing edge, a thickness of the first sealing region is less than a thickness of the second sealing region.

2. The electrochemical device according to claim 1, wherein a first imprint is formed between the first sealing region and the second sealing region, and a second imprint is formed between the second sealing region and the accommodation space.

3. The electrochemical device according to claim 1, wherein the electrochemical device further comprises an overflow adhesive, the overflow adhesive is connected to the second sealing region and is accommodated in the accommodation space, and, along the first direction, a width of the first sealing region is $W_1$ (mm), a width of the second sealing region is $W_2$ (mm), and, in the thickness direction of the first sealing edge, a thickness of the first sealing film is $T_0$ (mm), the thickness of the first sealing region is $H_0$ (mm), and a maximum thickness of the second sealing region is $H_1$ (mm); and
a cross-sectional area $S$ (mm$^2$) of the overflow adhesive along the thickness direction of the first sealing edge satisfies the following formula:

$$(2 \times T_0 - H_1) \times (W_1 + W_2) < S < (2 \times T_0 - H_0) \times (W_1 + W_2).$$

4. The electrochemical device according to claim 3, wherein a ratio of $W_2$ to $W_1$ is 0.01 to 0.5.

5. The electrochemical device according to claim 3, wherein a ratio of $H_1$ to $H_0$ is 1 to 10.

6. The electrochemical device according to claim 1, wherein a tensile sealing force of both the first sealing region and the second sealing region is 1 to 10 N/mm.

7. The electrochemical device according to claim 1, wherein the electrochemical device further comprises a first tab, the first tab is electrically connected to the electrode assembly and protrudes from one side of the housing, and the first sealing edge and the first tab are located on a same side of the electrochemical device.

8. The electrochemical device according to claim 1, wherein the housing further comprises a second sealing edge, the second sealing edge is connected to or disconnected from the first sealing edge, and the second sealing edge comprises a third sealing film and a fourth sealing film;

   a direction from a side of the second sealing edge close to the accommodation space to a side away from the accommodation space is defined as a second direction, and, along the second direction, the third sealing film comprises a fifth seal region and a sixth seal region that are connected to each other, and the fourth sealing film comprises a seventh seal region and an eighth seal region that are connected to each other; and
   the sixth seal region and the eighth seal region combine to form a third sealing region, the fifth seal region and the seventh seal region combine to form a fourth sealing region, and, in a thickness direction of the second sealing edge, a thickness of the third sealing region is less than a thickness of the fourth sealing region.

9. The electrochemical device according to claim 8, wherein the housing further comprises a third sealing edge, the third sealing edge is connected to the first sealing edge or the second sealing edge, and the third sealing edge comprises a fifth sealing film and a sixth sealing film;

   a direction from a side of the third sealing edge close to the accommodation space to a side away from the accommodation space is defined as a third direction, and, along the third direction, the fifth sealing film comprises a ninth seal region and a tenth seal region that are connected to each other, and the sixth sealing film comprises an eleventh seal region and a twelfth seal region that are connected to each other; and
   the tenth seal region and the twelfth seal region combine to form a fifth sealing region, the ninth seal region and the eleventh seal region combine to form a sixth sealing region, and, in a thickness direction of the third sealing edge, a thickness of the fifth sealing region is less than a thickness of the sixth sealing region.

10. An electronic device, comprising the electrochemical device according to any one of claims 1 to 9.

FIG. 1

FIG. 2

FIG. 3

FIG. 4

FIG. 5

FIG. 6

FIG. 7

## INTERNATIONAL SEARCH REPORT

| International application No. |
|---|
| **PCT/CN2020/080969** |

| A. | CLASSIFICATION OF SUBJECT MATTER |
|---|---|

H01M 2/02(2006.01)i

According to International Patent Classification (IPC) or to both national classification and IPC

| B. | FIELDS SEARCHED |
|---|---|

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI; EPODOC; CNKI; CNPAT: 电池, 封装, 密封, 热封, 封印, 第一, 第二, 内, 外, 溢胶, 应力, 折边, 折痕, 面积, 厚度, 宽度, 长度, battery, shell, heat, seal, packag+, film, space, thickness, overflow, region

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 106058083 A (CONTEMPORARY AMPEREX TECHNOLOGY LTD.) 26 October 2016 (2016-10-26) <br> description, paragraphs [0056]-[0064], and figures 5-8 | 1-10 |
| X | CN 102439754 A (LG CHEMICAL LTD.) 02 May 2012 (2012-05-02) <br> description, paragraphs [0022]-[0058], and figures 4-6 | 1-10 |
| A | CN 203103433 U (TIANJIN LISHEN BATTERY JOINT-STOCK CO., LTD.) 31 July 2013 (2013-07-31) <br> entire document | 1-10 |
| A | CN 110391356 A (NINGDE AMPEREX TECHNOLOGY LTD.) 29 October 2019 (2019-10-29) <br> entire document | 1-10 |
| A | CN 106252578 A (CONTEMPORARY AMPEREX TECHNOLOGY LTD.) 21 December 2016 (2016-12-21) <br> entire document | 1-10 |
| A | JP 2004055154 A (NISSAN MOTOR CO., LTD.) 19 February 2004 (2004-02-19) <br> entire document | 1-10 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **02 December 2020** | **21 December 2020** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

EP 4 113 645 A1

**INTERNATIONAL SEARCH REPORT**
**Information on patent family members**

International application No.

**PCT/CN2020/080969**

| Patent document cited in search report | | | Publication date (day/month/year) | Patent family member(s) | | | Publication date (day/month/year) |
|---|---|---|---|---|---|---|---|
| CN | 106058083 | A | 26 October 2016 | None | | | |
| CN | 102439754 | A | 02 May 2012 | US | 2012148914 | A1 | 14 June 2012 |
| | | | | US | 8148004 | B2 | 03 April 2012 |
| | | | | EP | 2434560 | A2 | 28 March 2012 |
| | | | | JP | 5793788 | B2 | 14 October 2015 |
| | | | | US | 8530075 | B2 | 10 September 2013 |
| | | | | WO | 2010134788 | A2 | 25 November 2010 |
| | | | | KR | 20100126226 | A | 01 December 2010 |
| | | | | US | 2011086259 | A1 | 14 April 2011 |
| | | | | JP | 2012527724 | A | 08 November 2012 |
| CN | 203103433 | U | 31 July 2013 | None | | | |
| CN | 110391356 | A | 29 October 2019 | None | | | |
| CN | 106252578 | A | 21 December 2016 | CN | 106252578 | B | 08 January 2019 |
| JP | 2004055154 | A | 19 February 2004 | None | | | |

Form PCT/ISA/210 (patent family annex) (January 2015)

17